# EUROPEAN PATENT APPLICATION

(11) **EP 4 517 610 A1**
(43) Date of publication of application: **05.03.2025**
(21) Application number: 24197200.9
(22) Date of filing: 29.08.2024
(51) Int. Cl.: G06N 20/00, G06T 19/00

(54) **METHOD AND SYSTEM FOR TRAINING IMAGE GENERATION MODEL USING CONTENT INFORMATION**

(30) Priority: 31.08.2023 KR 20230115734
(71) Applicant: GenGenAI Inc., Seoul 06038 (KR)
(72) Inventor: CHO, Hojin, 06038 Seoul (KR); KIM, Sangil, 06038 Seoul (KR); YEO, Donghun, 06038 Seoul (KR); LEE, Seongjin, 06038 Seoul (KR)
(74) Representative: Studio Torta S.p.A.

(57) **Abstract**

The present disclosure relates to a method of training an image generation model performed by at least one processor. The method of training an image generation model includes receiving a training image in a first domain style, extracting, by the at least one processor, first content information for the training image, generating, by the at least one processor, a plurality of pieces of augmented content information perturbed from the first content information as part of image processing by augmenting the first content information, and training an image generation model to generate a synthetic image in the first domain style from an input image in a second domain style different from the first domain style, wherein the training of the image generation model is based on the training image, the first content information, and the plurality of pieces of augmented content information.

## Description

### TECHNICAL FIELD

Aspects of the present disclosure relate to a method and system for training an image generation model, and more particularly, to a method and system for training an image generation model based on content information extracted from training images.

### BACKGROUND

AI-based image generation technology is a technology that generates new images based on input such as text, and is making innovative progress with the development of deep learning technology and generative models. AI-based image generation technology is one of the research topics receiving a lot of attention in the field of computer vision, and is used in a variety of applications such as style transfer, image enhancement, and image synthesis.

However, for at least some image generation technology, an image generation model may be biased toward a particular dataset domain depending on the camera characteristics of the training images. Accordingly, there is a problem that detailed parts of an image are not properly generated or the structural information of the generated image is distorted. These problems act as factors reducing the reliability of generated images and limiting their usability in applications.

### SUMMARY

Embodiments of the present disclosure provide a method and system for training an image generation model to solve the problems described above.

The present disclosure may be implemented in a variety of ways, including methods, devices (systems), or non-transitory computer-readable recording media storing instructions.

According to some embodiments of the present disclosure, a method of training an image generation model performed by at least one processor includes receiving a training image in a first domain style, extracting, by the at least one processor, first content information for the training image, generating, by the at least one processor, a plurality of pieces of augmented content information perturbed from the first content information as part of image processing by augmenting the first content information, and training an image generation model to generate a synthetic image in the first domain style from an input image in a second domain style different from the first domain style, wherein the training of the image generation model is based on the training image, the first content information, and the plurality of pieces of augmented content information.

According to some embodiments of the present disclosure, the first content information may represent structural information on objects in the training image.

According to some embodiments of the present disclosure, the step of generating the plurality of pieces of augmented content information may include perturbing the first content information as part of image processing, and the image processing may include at least one of translation processing, rotation processing, flipping processing, enlargement processing, reduction processing, crop processing, brightness adjustment processing, saturation adjustment processing, or noise injection processing.

According to some embodiments of the present disclosure, a pair of the training image and the first content information, and pairs of the training image and each of the plurality of pieces of augmented content information may be used as training data for training the image generation model.

According to some embodiments of the present disclosure, the trained image generation model may be trained to generate a synthetic image in the first domain style with second content information as a soft constraint.

According to some embodiments of the present disclosure, the trained image generation model may be trained to generate, based on second content information, a synthetic image in the first domain style.

According to some embodiments of the present disclosure, the second content information may be extracted from an input image in a second domain style, and the first domain style and the second domain style may be different from each other.

According to some embodiments of the present disclosure, the second domain style may be a virtual domain style, and the first domain style may be a real domain style.

According to some embodiments of the present disclosure, a method of generating an image performed by at least one processor includes receiving an input image in a second domain style different from a first domain style, extracting second content information for the input image, and outputting a synthetic image in the first domain style associated with the second content information by using an image generation model, wherein the image generation model receives a training image in the first domain style, extracts first content information for the training image, generates a plurality of pieces of augmented content information perturbed from the first content information as part of image processing by augmenting the first content information, and is trained to generate the synthetic image in the first domain style from the input image in the second domain style, wherein the image generation model is trained based on the training image, the first content information, and the plurality of pieces of augmented content information.

A non-transitory computer-readable medium storing instructions, when executed, cause performance of the methods in accordance with some embodiments of the present disclosure is provided.

An information processing system in accordance with some embodiments of the present disclosure includes a communication interface, a memory, and at least one processor coupled to the memory and configured to execute at least one computer-readable program included in the memory, wherein the at least one computer-readable program includes instructions that, when executed by the at least one processor, cause the information processing system to receive a training image in a first domain style, extract first content information for the training image, generate a plurality of pieces of augmented content information perturbed from the first content information as part of image processing by augmenting the first content information, and train an image generation model to generate a synthetic image in the first domain style from an input image in a second domain style different from the first domain style, wherein training of the image generation model is based on the training image, the first content information, and the plurality of pieces of augmented content information.

According to some embodiments of the present disclosure, the processor can generate nearly infinite synthetic images in a real domain style by using the image generation model. The high-quality images in the real domain style generated in this way can be used as vehicle autonomous driving training images. Through this method, the problem of difficulty in obtaining a sufficient amount of actual driving data required for vehicle autonomous driving training can be solved at a low cost and in a short time.

According to some embodiments of the present disclosure, content information can be generated in other ways, without extracting the content information from an input image. For example, content information can be generated with human hand drawing and inputted into the image generation model to generate synthetic images. Accordingly, optimal synthetic images to which the content information desired by the user is applied can be generated at a low cost.

According to some embodiments of the present disclosure, the image generation model can generate more natural and realistic synthetic images than when applying the content information of the input image as a hard constraint.

According to some embodiments of the present disclosure, high-quality synthetic images, obtained by reflecting various content information including from high-level structural information extracted from an input image to low-level structural information, can be generated.

The effects of the present disclosure are not limited to those mentioned above, and other effects that have not been mentioned will be clearly understood by those having ordinary skill in the art to which the present disclosure pertains (hereinafter referred to as a "person of ordinary skill") from the description of the claims.

### BRIEF DESCRIOPTION OF THE DRAWINGS

Embodiments of the present disclosure will be described with reference to the accompanying drawings described below, in which like reference numerals denote like elements, but are not limited thereto.
FIG. 1 is a diagram showing an example of generating a synthetic image based on an input image according to some embodiments of the present disclosure;
FIG. 2 is a schematic diagram showing a configuration in which an information processing system is communicatively connected with a plurality of user terminals in order to generate a synthetic image according to some embodiments of the present disclosure;
FIG. 3 is a block diagram showing the internal configuration of a user terminal and an information processing system in accordance with some embodiments of the present disclosure;
FIG. 4 is a diagram showing an example of a method for training an image generation model according to some embodiments of the present disclosure;
FIG. 5 is a diagram showing an example of a method for training an image generation model according to some embodiments of the present disclosure;
FIG. 6 is a diagram showing examples of content information according to some embodiments of the present disclosure;
FIG. 7 is a diagram showing an example of an artificial neural network model in accordance with some embodiments of the present disclosure;
FIG. 8 is a diagram showing an example of a synthetic image generated from an input image in accordance with some embodiments of the present disclosure;
FIG. 9 is a flowchart showing an example of a method for training an image generation model in accordance with some embodiments of the present disclosure; and
FIG. 10 is a flowchart showing an example of an image generation method in accordance with some embodiments of the present disclosure.

### DETAILED DESCRIPTION

Hereinafter, specific details for implementing the present disclosure will be described in detail with reference to the accompanying drawings. However, specific descriptions of widely known functions or configurations will be omitted in the following description if there is a possibility of unnecessarily obscuring the subject matter of the present disclosure.

In the accompanying drawings, identical or corresponding components are given the same reference numerals. Further, repetitive descriptions of identical or corresponding components may be omitted in the following description of the embodiments. However, even if descriptions of components are omitted, it is not intended that such components are not included in any embodiment.

Advantages and features of the disclosed embodiments, and methods for achieving them will become apparent with reference to the embodiments described below in conjunction with the accompanying drawings. However, the present disclosure is not limited to the embodiments disclosed below and may be implemented in a variety of different forms, and the present embodiments are merely provided so that the present disclosure is complete and fully inform those skilled in the art of the scope of the invention.

The terms used herein will be described briefly, and then the disclosed embodiments will be described specifically. For the terms used herein, ordinary terms that are currently widely used have been chosen, if possible, while taking into account the functions in the present disclosure, but this may vary depending on the intentions of technicians working in the related field, judicial precedents, the emergence of new technology, etc. Further, there are terms arbitrarily selected by the applicant in particular cases as well, in which case the meaning will be described in detail in the relevant description of the disclosure. Therefore, the terms used in the present disclosure should be defined based on the meanings of the terms and the overall content of the present disclosure, rather than simple names of the terms.

Singular expressions herein include plural expressions, unless the context clearly specifies that they are singular. Further, plural expressions include singular expressions, unless the context clearly specifies that they are plural. When a part is said to include a component throughout the specification, this does not mean to exclude other components but may mean to further include other components unless specifically stated to the contrary.

Further, the term "module" or "part" as used herein refers to a software or hardware component, and the "module" or "part" performs certain roles. However, the "module" or "part" does not carry a meaning limited to software or hardware. The "module" or "part" may be configured to reside on an addressable storage medium or may be configured to run one or more processors. Therefore, by way of example, the "module" or "part" may include at least one of components such as software components, object-oriented software components, class components, and task components, processes, functions, properties, procedures, subroutines, segments of program code, drivers, firmware, microcode, circuitry, data, databases, data structures, tables, arrays, or variables. The functionality provided within components and "modules" or "parts" may be combined into fewer components and "modules" or "parts," or may be further divided into additional components and "modules" or "parts."

According to some embodiments of the present disclosure, the "module" or "part" may be implemented with a processor and a memory. The "processor" should be construed broadly to encompass general-purpose processors, central processing units (CPUs), microprocessors, digital signal processors (DSPs), controllers, microcontrollers, state machines, etc. In some contexts, the "processor" may refer to application-specific integrated circuits (ASICs), programmable logic devices (PLDs), field programmable gate arrays (FPGAs), etc. The "processor" may also refer to a combination of processing devices such as, for example, a combination of a DSP and a microprocessor, a combination of a plurality of microprocessors, a combination of one or more microprocessors in combination with a DSP core, or a combination of any other such components. Further, the "memory" should be construed broadly to encompass any electronic component capable of storing electronic information. The "memory" may also refer to various types of processor-readable media, such as random-access memory (RAM), read-only memory (ROM), non-volatile random-access memory (NVRAM), programmable read-only memory (PROM), erasable-programmable read-only memory (EPROM), electrically erasable PROM (EEPROM), flash memory, magnetic or optical data storage, registers, etc. A memory is said to be in electronic communication with a processor if the processor can read information from and/or write information to the memory. The memory integrated into a processor is in electronic communication with the processor.

In the present disclosure, a "system" may include at least one of a server device and a cloud device, but is not limited thereto. For example, the system may be formed of one or more server devices. As another example, the system may be formed of one or more cloud devices. As yet another example, the system may operate by being formed of a server device and a cloud device together.

In the present disclosure, a "display" may refer to any display device associated with a computing device, and may refer to, for example, any display device controlled by the computing device or capable of displaying any information/data provided from the computing device.

In the present disclosure, "each of a plurality of A's" may refer to each of all components included in the plurality of A's, or may refer to each of some components included in the plurality of A's.

In the present disclosure, a "neural network model" may refer to a model that includes one or more artificial neural networks formed of an input layer, a plurality of hidden layers, and an output layer in order to infer an answer to a given input. Here, each layer may include a plurality of nodes.

In the present disclosure, "content information" may be information representing the structural information on objects in an image (e.g., category information, shape information, location information, etc., of an object). For example, the content information may include semantic segmentation information, panoptic segmentation information, instance segmentation information, SAM (Segmentation Anything Model) result information, bounding box information, edge information (e.g., Canny edge information), depth information, etc.

In the present disclosure, a "domain style" may refer to the visual characteristics and/or artistic style of an image, and may represent a unique combination of the field of view (FOV) of the camera that captured the image, camera parameters, the color, texture, pattern, and shape of the image, and other visual elements that define the overall shape and aesthetic quality of the image. For example, a domain style of an image may include a virtual domain style such as computer graphics (e.g., computer game graphics) and a real domain style such as that obtained by capturing the real world with a particular camera. If cameras that capture the real world are different from one another, images taken by each camera may have different domain styles depending on the various characteristics of the cameras.

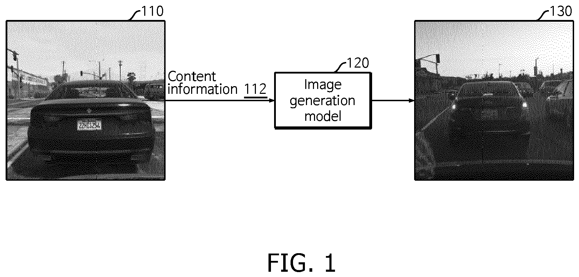

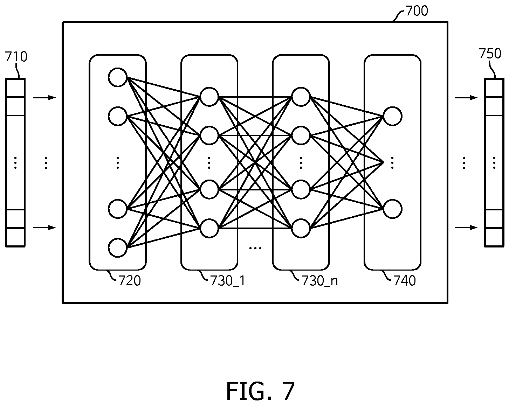

FIG. 1 is a diagram showing an example of generating a synthetic image 130 based on an input image 110 according to some embodiments of the present disclosure. Referring to FIG. 1, an image generation model 120 may be used in generating the synthetic image 130. Here, the image generation model 120 may be an artificial neural network model. Details on this will be described later with reference to FIG. 7.

According to some embodiments, a processor may receive the input image 110. Thereafter, the processor may extract content information 112 from the input image 110. Here, the input image 110 may be a virtual image generated in a virtual environment. For example, the input image 110 may be a virtual image generated via a computer game or computer simulation.

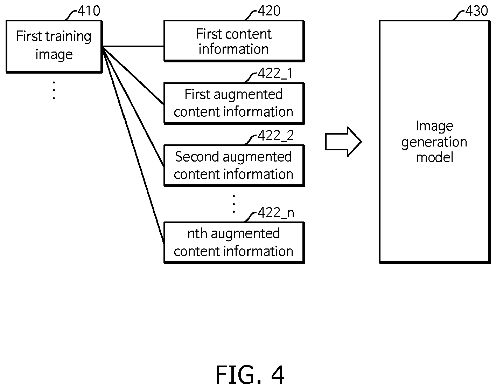

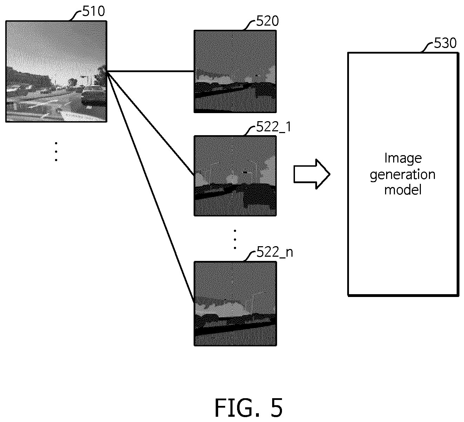

According to some embodiments, the processor may input the extracted content information 112 into the image generation model 120. Thereafter, the image generation model 120 may generate a synthetic image 130 based on the extracted content information 112. Here, the synthetic image 130 may be a real image such as one captured with a camera in a real environment. To this end, the image generation model 120 may be trained to generate a particular domain style (e.g., a real domain style) image based on the content information 112. Details on this will be described later with reference to FIGS. 4 and 5.

According to some embodiments, the content information of the synthetic image 130 may be similar to but not identical to the content information 112 of the input image 110. For example, the building locations, vehicle locations, vehicle directions, road locations, road directions, etc., in the synthetic image 130 may be similar to the building locations, vehicle locations, vehicle directions, road locations, road directions, etc., in the input image 110. However, the building locations, vehicle locations, vehicle directions, road locations, road directions, etc., in the synthetic image 130 may not match pixel wise with the building locations, vehicle locations, vehicle directions, road locations, road directions, etc., in the input image 110.

According to some embodiments, the domain style of the synthetic image 130 may be different from the domain style of the input image 110. For example, the domain style of the synthetic image 130 may be a real domain style, whereas the domain style of the input image 110 may be a virtual domain style such as computer graphics. However, the domain style of the input image 110 and/or the domain style of the synthetic image 130 is not limited to the examples described above, but may include various types of domain styles (e.g., a cartoon image style, a pointillism image style, a hand drawing image style, etc.).

As with the configuration described above, the processor may extract the content information 112 from the input image 110, and the image generation model 120 may generate a new synthetic image 130 in another domain style including similar content based thereon. Accordingly, the image generation model 120 may generate a high-quality synthetic image 130 in a domain style different from the input image 110.

According to some embodiments, the processor may generate nearly infinite virtual images or virtual images of a desired scenario by using a computer, and convert the generated virtual images into real images by using the image generation model 120. The high-quality real images of the required amount or required scenario generated in this way can be used as vehicle autonomous driving training images. Through this method, the problem of difficulty in obtaining a sufficient amount of actual driving data required for vehicle autonomous driving training can be solved at a low cost and in a short time.

FIG. 1 shows that the content information 112 is extracted from the input image 110 and is inputted into the image generation model 120 to generate the synthetic image 130, but the present embodiment is not limited thereto. For example, the content information 112 may be generated in other ways, without extracting the content information 112 from the input image 110. For example, content information may be generated with human hand drawing and inputted into the image generation model 120 to generate a synthetic image. The method of generating/extracting content information is not limited to this, and content information may be generated/extracted using any method.

In FIG. 1, the image generation model 120 is shown as a model that generates a real image based on content information but is not limited thereto. For example, the image generation model 120 may be trained to generate any domain style image based on the content information. The domain style of the synthetic image generated by the image generation model 120 may be determined by the domain style of the training data used in training the image generation model 120.

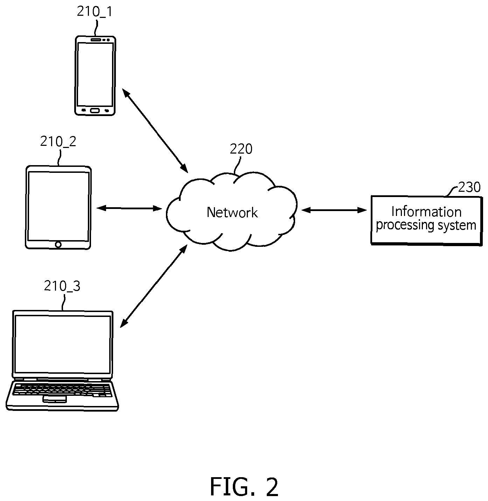

FIG. 2 is a schematic diagram showing a configuration in which an information processing system 230 is communicatively connected with a plurality of user terminals 210_1, 210_2, and 210_3 in order to generate a synthetic image according to some embodiments of the present disclosure. Referring to FIG. 2, the plurality of user terminals 210_1, 210_2, and 210_3 may be connected to the information processing system 230 capable of generating synthetic images via a network 220. Here, the plurality of user terminals 210_1, 210_2, and 210_3 may include user terminals to which the generated training images are provided.

In some embodiments, the information processing system 230 may include one or more server devices and/or databases capable of storing, providing, and executing computer-executable programs (e.g., downloadable applications) and data associated with the generation of synthetic images, or one or more distributed computing devices and/or distributed databases based on cloud computing services.

The synthetic images provided by the information processing system 230 may be provided to a user via an image generation application web browser, a web browser extension program, or the like installed on each of the plurality of user terminals 210_1, 210_2, and 210_3. For example, the information processing system 230 may provide information or perform processing corresponding to a synthetic image generation request received from the user terminals 210_1, 210_2, and 210_3 via an image generation application or the like.

The plurality of user terminals 210_1, 210_2, and 210_3 may communicate with the information processing system 230 via the network 220. The network 220 may be configured to enable communication between the plurality of user terminals 210_1, 210_2, and 210_3 and the information processing system 230. The network 220 may be formed of wired networks such as, for example, Ethernet, wired home networks (power line communication), telephone line communication devices, and RS-serial communication, wireless networks such as mobile communication networks, WLAN (wireless LAN), Wi-Fi, Bluetooth, and ZigBee, or combinations thereof, depending on the installation environment. The communication methods are not limited, but a communication method utilizing a communication network (as an example, a mobile communication network, wired Internet, wireless Internet, a broadcasting network, a satellite network, etc.) that the network 220 may include, as well as short-distance wireless communication between the user terminals 210_1, 210_2, and 210_3 may be included.

In FIG. 2, a mobile phone terminal 210_1, a tablet terminal 210_2, and a PC terminal 210_3 are shown as examples of the user terminals, but the present embodiment is not limited thereto, and the user terminals 210_1, 210_2, and 210_3 may be any computing devices capable of wired and/or wireless communication and on which an image generation model training service application or a web browser, or an image generation service application or a web browser, or the like can be installed and executed. For example, the user terminals may include AI speakers, smartphones, mobile phones, navigation systems, computers, laptops, digital broadcasting terminals, PDAs (personal digital assistants), PMPs (portable multimedia players), tablet PCs, game consoles, wearable devices, IoT (internet of things) devices, VR (virtual reality) devices, AR (augmented reality) devices, set-top boxes, etc. Further, FIG. 2 shows that three user terminals 210_1, 210_2, and 210_3 communicate with the information processing system 230 via the network 220, but the present embodiment is not limited thereto, and a different number of user terminals may be configured to communicate with the information processing system 230 via the network 220.

FIG. 2 shows a configuration, by way of example, in which the user terminals 210_1, 210_2, and 210_3 are provided with the generated synthetic images by communicating with the information processing system 230, but the present embodiment is not limited thereto. For example, the user terminals 210_1, 210_2, and 210_3 may generate synthetic images directly, without communicating with the information processing system 230.

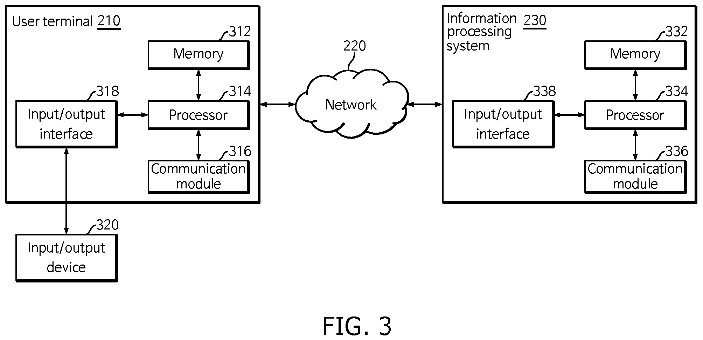

FIG. 3 is a block diagram showing the internal configuration of the user terminal 210 and the information processing system 230 in accordance with some embodiments of the present disclosure. The user terminal 210 may refer to any computing device capable of executing applications, web browsers, etc., and capable of wired/wireless communication, and may include, for example, the mobile phone terminal 210_1, the tablet terminal 210_2, and the PC terminal 210_3, etc., of FIG. 2. Referring to FIG. 3, the user terminal 210 may include a memory 312, a processor 314, a communication module 316, and an input/output interface 318. Similarly, the information processing system 230 may include a memory 332, a processor 334, a communication module 336, and an input/output interface 338. Referring to FIG. 3, the user terminal 210 and the information processing system 230 may be configured to communicate information and/or data via the network 220 by using the respective communication modules 316 and 336. Further, an input/output device 320 may be configured to input information and/or data to the user terminal 210 or to output information and/or data generated from the user terminal 210 via the input/output interface 318.

The memories 312 and 332 may include any non-transitory computer-readable recording medium. According to some embodiments, the memories 312 and 332 may include permanent mass storage devices, such as read only memory (ROM), disk drives, solid state drives (SSDs), flash memory, etc. As another example, the permanent mass storage device, such as ROM, SSD, flash memory, a disk drive, etc., may be included in the user terminal 210 or the information processing system 230 as a separate persistent storage device distinct from the memories. Further, the memories 312 and 332 may store an operating system and at least one program code.

These software components may be loaded from a computer-readable recording medium separate from the memories 312 and 332. Such a separate computer-readable recording medium may include a recording medium directly connectable to the user terminal 210 and the information processing system 230, and may include, for example, computer-readable recording media such as floppy drives, disks, tapes, DVD/CD-ROM drives, and memory cards. As another example, the software components may be loaded into the memories 312 and 332 via the communication modules 316 and 336 rather than computer-readable recording media. For example, at least one program may be loaded onto the memories 312 and 332 based on a computer program installed by files provided via the network 220 by developers or a file distribution system that distributes installation files of an application.

The processors 314 and 334 may be configured to process commands of a computer program by performing basic arithmetic, logic, and input/output operations. The commands may be provided to the processors 314 and 334 by the memories 312 and 332 or the communication modules 316 and 336. For example, the processors 314 and 334 may be configured to execute the commands received according to program codes stored in recording devices such as the memories 312 and 332.

The communication modules 316 and 336 may provide a configuration or function for the user terminal 210 and the information processing system 230 to communicate with each other via the network 220, and may provide a configuration or function for the user terminal 210 and/or the information processing system 230 to communicate with other user terminals or other systems (as one example, a separate cloud system, etc.). As one example, requests or data (e.g., an image generation model training request, a synthetic image generation request, etc.) generated by the processor 314 of the user terminal 210 according to the program code stored in a recording device such as the memory 312 and the like may be transmitted to the information processing system 230 via the network 220 under the control of the communication module 316. Conversely, control signals or commands provided under the control of the processor 334 of the information processing system 230 may be received by the user terminal 210 via the communication module 316 of the user terminal 210 by way of the communication module 336 and the network 220.

The input/output interface 318 may be a means for interfacing with the input/output device 320. As one example, the input device may include devices such as a camera including an audio sensor and/or an image sensor, a keyboard, a microphone, a mouse, and the output device may include devices such as a display, a speaker, a haptic feedback device, etc. As another example, the input/output interface 318 may be a means for interfacing with a device in which configurations or functions for performing input and output are integrated into one, such as a touchscreen, etc. For example, when the processor 314 of the user terminal 210 processes a command of a computer program loaded into the memory 312, a service screen or the like configured using information and/or data provided by the information processing system 230 or another user terminal may be displayed on a display via the input/output interface 318. In FIG. 3, the input/output device 320 is shown not to be included in the user terminal 210 but is not limited thereto and may be formed as a single device together with the user terminal 210. Further, the input/output interface 338 of the information processing system 230 may be a means for interfacing with a device (not shown) for input or output that may be connected to the information processing system 230 or that the information processing system 230 may include. In FIG. 3, the input/output interfaces 318 and 338 are shown as elements configured separately from the processors 314 and 334, but are not limited thereto, and the input/output interfaces 318 and 338 may be configured to be included in the processors 314 and 334.

The user terminal 210 and the information processing system 230 may include more components than those in FIG. 3. However, there is no need to explicitly show most of the prior art components. In some embodiments, the user terminal 210 may be implemented to include at least some of the input/output devices 320 described above. Moreover, the user terminal 210 may further include other components such as a transceiver, a global positioning system (GPS) module, a camera, various sensors, a database, etc.

While a program for image generation model training, image generation application, etc., is running, the processor 314 may receive text, images, videos, voices, and/or actions, etc., entered or selected via the input device such as a touch screen, a keyboard, a camera including an audio sensor and/or an image sensor, and a microphone connected to the input/output interface 318, and may store the received text, images, videos, voices, and/or actions, etc., in the memory 312 or provide them to the information processing system 230 via the communication module 316 and the network 220.

The processor 314 of the user terminal 210 may be configured to manage, process, and/or store information and/or data received from the input/output device 320, other user terminals, the information processing system 230, and/or a plurality of external systems. The information and/or data processed by the processor 314 may be provided to the information processing system 230 via the communication module 316 and the network 220. The processor 314 of the user terminal 210 may transmit and output the information and/or data to the input/output device 320 via the input/output interface 318. For example, the processor 314 may output or display the received information and/or data on a screen of the user terminal 210.

The processor 334 of the information processing system 230 may be configured to manage, process, and/or store information and/or data received from the plurality of user terminals 210 and/or a plurality of external systems. The information and/or data processed by the processor 334 may be provided to the user terminal 210 via the communication module 336 and the network 220.

FIG. 4 is a diagram showing an example of a method for training an image generation model 430 according to some embodiments of the present disclosure. According to some embodiments, the image generation model 430 may be trained based on a first training image 410 in a first domain style. For example, the image generation model 430 may be trained based on the first training image 410 in the first domain style, first content information 420 extracted from the first training image 410, and augmented content information 422_1 to 422_n generated from the first content information 420.

According to some embodiments, the processor may receive a plurality of images for training the image generation model 430. In this case, the plurality of images may be images in the same domain style. For example, the processor may receive a first training image 410 to a kth training image (not shown; k is a natural number greater than or equal to 2) in a first domain style for training the image generation model 430. In this case, the training images in the first domain style may be virtual images generated in a virtual environment (e.g., a 3D game, simulation, metaverse, etc.). Further, training images in various domain styles (e.g., cartoon rendered images, etc.) other than virtual images may be used.

According to some embodiments, the processor may extract content information from the plurality of training images received for training the image generation model 430. For example, the processor may extract the first content information 420 from the first training image 410 in the first domain style. Likewise, the processor may extract content information from the remaining images in the first domain style received for training the image generation model 430. Here, the content information may include structural information such as the location and direction of objects (e.g., people, animals, objects, etc.) included in the training image.

According to some embodiments, the processor may generate a plurality of pieces of augmented content information by augmenting the content information. For example, the processor may generate first augmented content information 422_1 to nth augmented content information 422_n by augmenting the first content information 420. For this purpose, the processor may perform image processing to perturb the first content information 420. For example, the image processing to perturb the first content information 420 may include at least one of translation processing, rotation processing, flipping processing, enlargement processing, reduction processing, crop processing, brightness adjustment processing, saturation adjustment processing, or noise injection processing. Similarly, the processor may generate a plurality of pieces of augmented content information by augmenting each content information extracted from the remaining images in the first domain style.

According to some embodiments, the image generation model 430 may use the training image, the content information extracted from the training image, and the augmented content information obtained by augmenting the extracted content information as training data. For example, the first training image 410, the first content information 420, and the augmented content information 422_1 to 422_n in the first domain style may be used as training data. For example, the pair of the first training image 410 and the first content information, and the pairs of the first training image 410 and each of the plurality of pieces of augmented content information 422_1 to 422_n (the pair of 410 and 422_1, pair of 410 and 422_2 ..., and pair of 410 and 422_n) may be used as training data. Similarly, for each of the remaining images in the first domain style, the pair of the image and the content information and the pairs of the image and the augmented content information may be used as training data.

According to some embodiments, the trained image generation model 430 may generate a first domain style (e.g., real domain style) image based on content information of an input image, regardless of the domain style of the input image. For example, the image generation model 430 may generate a synthetic image in a first domain style based on content information of an input image in a second domain style. In this case, the synthetic image may include backgrounds and objects that are different in a domain style from the input image but are similar to the input image.

According to the configuration described above, the image generation model 430 may use not only the pair of the training image in the first domain style and the content information but also the pairs of the training image in the first domain style and each of the plurality of pieces of the augmented content information as training data. Through this, the image generation model 430 can be trained so that a plurality of pieces of augmented content information associated with the training image corresponds to one training image, thereby weakening the connectivity between the training image and the content information extracted from the training image. Through this method, the image generation model 430 may generate a synthetic image by using the content information of the input image as a weak constraint or soft constraint rather than a hard constraint. Here, a soft constraint may refer to applying the content information of the input images in a similar but not identical manner, allowing for some modification in the shape and location of the pixel area occupied by objects within the input images. For example, the image generation model 430 may not be overly dependent on the content information of the input image by not applying pixel-wise the content information of the input image as a hard constraint. Accordingly, the image generation model 430 can generate a more natural and realistic synthetic image than when applying the content information of the input image as a hard constraint.

FIG. 5 is a diagram showing an example of a method for training an image generation model 530 according to some embodiments of the present disclosure. The example of training the image generation model 430 described with reference to FIG. 4 will be described using specific images in FIG. 5. According to some embodiments, the image generation model 530 may be trained based on a first training image 510 in a first domain style. For example, the image generation model 530 may be trained based on the first training image 510 in the first domain style, first content information 520 extracted from the first training image 510, and augmented content information 522_1 to 522_n generated from the first content information 520.

According to some embodiments, the processor may receive the first training image 510 in the first domain style for training the image generation model 530. Thereafter, the processor may extract the first content information 520 from the first training image 510. Further, the processor may generate a plurality of pieces of augmented content information 522_1 to 522_n from the first content information 520. Referring to FIG. 5, each of the plurality of pieces of augmented content information 522_1 to 522_n may be different from the first content information 520, although they are similar to the first content information 520 in a general sense. For example, similar background/object information may be included, but the placement locations, ratios, etc., may be different. Thereafter, the image generation model 530 may use the pair of the first training image 510 and the first content information 520, and the pairs of the first training image 510 and each of the plurality of pieces of augmented content information 522_1 to 522_n (the pair of 510 and 522_1, pair of 510 and 522_2 ..., and pair of 510 and 522_n) as training data.

Further, the processor may receive additional training images in the first domain style for training the image generation model 530. In this case, the processor may generate a plurality of pieces of augmented content information by augmenting each content information extracted from the additional training images in the first domain style. The processor may use the pair of the image and the content information and the pairs of the image and the augmented content information as training data, for each of the additional images in the first domain style as well.

In FIG. 5, the image generation model 530 is shown as a model trained based on the first training image 510 in the real domain style, but the domain style of the training image is not limited thereto. For example, the image generation model 530 may use training images of various types of domain styles (e.g., a cartoon image style, a pointillism image style, a hand drawing image style, etc.) as training data. For example, the image generation model 530 may be trained using training images in a cartoon image style as training data. In this case, the image generation model 530 may generate a synthetic image in the cartoon image style.

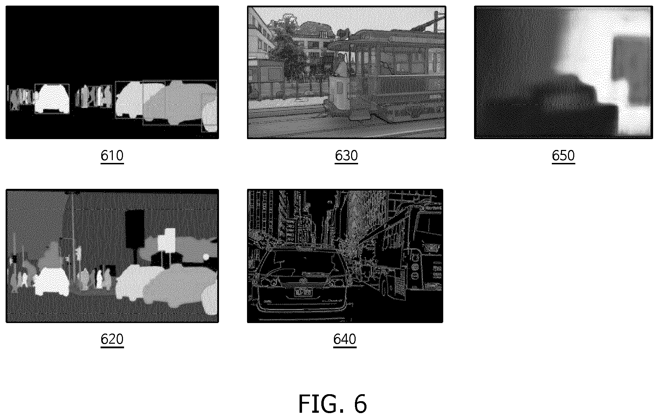

Referring to FIG. 5, the first content information 520 and the augmented content information 522_1 to 522_n may be semantic segmentation information. In this case, the processor may extract the first content information 520 by dividing the objects included in the first training image 510 into semantic units. For example, FIG. 5 shows that the objects included in the first training image 510 are distinguished into semantic units according to categories such as trees, cars, roads, and sky, and objects within the same category are not classified and extracted. However, the content information extracted from the training image is not limited to this, and various examples thereof will be described later with reference to FIG. 6.

FIG. 6 is a diagram showing examples of content information according to some embodiments of the present disclosure. According to some embodiments, the processor may extract content information from a training image and an input image. Here, the content information may represent the structural information on objects included in the images, which can be extracted from the training image and the input image.

According to some embodiments, the content information may include instance segmentation 610 information. In this case, the processor may extract objects included in the training image and/or the input image by dividing them into object units. For example, the processor may extract each of the objects (e.g., cars, people, etc.) included in the training image and/or the input image by distinguishing them into object units, and may not extract sky, roads, or the like that do not have a defined shape.

According to some embodiments, the content information may include panoptic segmentation 620 information. In this case, the processor may extract all objects included in the training image and/or the input image by dividing them into object units. For example, the processor may extract all the objects (e.g., cars, people, trees, etc.) included in the training image and/or the input image by dividing them into object units. For the panoptic segmentation, sky, roads, or the like that do not have a defined shape may also be extracted, unlike the instance segmentation.

According to some embodiments, the content information may include a Segmentation Anything Model (SAM) result 630. In this case, the processor may extract the content information by dividing it into all objects included in the training image and/or the input image and/or component units that constitute the object. For example, the processor may extract all the objects (e.g., cars, people, trees, etc.) included in the training image and/or the input image by dividing them into object units and/or component units that constitute the object. Further, the content information may include edge information 640 and depth information 650.

In FIG. 6, the instance segmentation 610 information, the panoptic segmentation 620 information, the SAM (Segmentation Anything Model) result 630, the edge information 640, and the depth information 650 are shown as examples of the content information, but the types of content information are not limited to these. For example, the content information may include semantic segmentation, bounding box information, etc. As such, the content information may include all information associated with the shapes of objects that can be extracted from the image. According to this method, high-quality synthetic images, obtained by reflecting various content information including from high-level structural information extracted from an input image to low-level structural information, can be generated.

FIG. 7 is a diagram showing an example of an artificial neural network model 700 in accordance with some embodiments of the present disclosure. The artificial neural network model 700 is one example of a machine learning model, and is a statistical learning algorithm implemented based on the structure of a biological neural network or a structure that executes the algorithm, in machine learning technology and cognitive science.

According to some embodiments, the artificial neural network model 700 may represent a machine learning model with problem-solving capabilities, by having nodes, which are artificial neurons formed into a network by the coupling of synapses as in biological neural networks, trained so that the error between the correct output corresponding to a particular input and the inferred output is reduced by repetitively adjusting the weights of the synapses. For example, the artificial neural network model 700 may include any probability model, neural network model, etc., used in artificial intelligence learning methods such as machine learning and deep learning.

According to some embodiments, the image generation model described above may be generated in the form of the artificial neural network model 700. For example, the artificial neural network model 700 may receive second content information extracted from an input image in a second domain style and output a synthetic image in a first domain style associated with the second content information.

The artificial neural network model 700 may be implemented with a multilayer perceptron (MLP) consisting of multiple layers of nodes and connections between them. The artificial neural network model 700 in accordance with the present embodiment may be implemented using one of a variety of artificial neural network model structures, including MLP. Referring to FIG. 7, the artificial neural network model 700 may consist of an input layer 720 that receives an input signal or data 710 from the outside, an output layer 740 that outputs an output signal or data 750 corresponding to the input data, and n (where n is a positive integer) hidden layers 730_1 to 730_n that is located between the input layer 720 and the output layer 740, and receives signals from the input layer 720, extracts and transmits characteristics to the output layer 740. Here, the output layer 740 receives signals from the hidden layers 730_1 to 730_n and outputs them to the outside.

Training methods for the artificial neural network model 700 include a supervised learning method in which training is optimized for solving a problem by inputting a teacher signal (correct answer) and an unsupervised learning method that does not require a teacher signal. According to some embodiments, the information processing system may train the artificial neural network model 700 by using training images in a first domain style, content information extracted from the training images, and augmented content information generated from the content information. According to some embodiments, the information processing system may directly generate training data for training the artificial neural network model 700.

According to some embodiments, the input variables to the artificial neural network model 700 may include second content information extracted from an input image in a second domain style. If the input variables described above are inputted through the input layer 720 in this way, the output variables outputted from the output layer 740 of the artificial neural network model 700 may be a synthetic image in the first domain style.

As such, a plurality of input variables and a plurality of output variables corresponding thereto may be matched to the input layer 720 and the output layer 740 of the artificial neural network model 700, respectively, the synaptic values between the nodes included in the input layer 720, the hidden layers 730_1 to 730_n, and the output layer 740 may be adjusted, and thus, training may be carried out so that the correct output corresponding to the particular input can be extracted. Through this training process, it is possible to identify characteristics hidden in the input variables of the artificial neural network model 700, and the synaptic values (or weights) between the nodes of the artificial neural network model 700 can be adjusted such that the error between the output variable calculated based on the input variable and the target output is reduced.

In some embodiments, the artificial neural network model 700 may be a flow-based generative model. The flow-based generative model may be a generative adversarial network (GAN) model, a diffusion model, or a variational auto-encoder (VAE) model.

According to some embodiments, the image generation model may be a "GAN (generative adversarial network) model." Here, the "GAN model" may refer to a machine learning model that include a generator and a discriminator. The generator learns a method of generating synthetic data samples by using random noise as input and gradually improving its ability to generate realistic samples similar to the training data. The discriminator acts as a binary classifier that learns a method of distinguishing between real and fake samples. The GAN model aims to train a generator that can produce high-quality samples that a discriminator cannot distinguish from real data through an adversarial training process. For example, the information processing system may train a generator of the image generation model to minimize the loss between the training image that is the correct answer data and the training image outputted from the generator of the image generation model. Further, the information processing system may train a discriminator of the image generation model to minimize the loss between the authenticity of the training image that is the correct answer data and the authenticity discrimination result of the training image outputted from the discriminator of the image generation model.

According to some embodiments, the image generation model may be a "diffusion model." Here, the "diffusion model" may refer to a generative model that learns a method of generating high-quality samples by repeatedly applying a series of noise injection and diffusion processors to a given initial data sample. By performing the diffusion step in reverse, the diffusion model can generate real samples from random noise. For example, the information processing system may train the image generation model to generate high-quality synthetic images by repeatedly applying a series of noise injection and diffusion processors to training images.

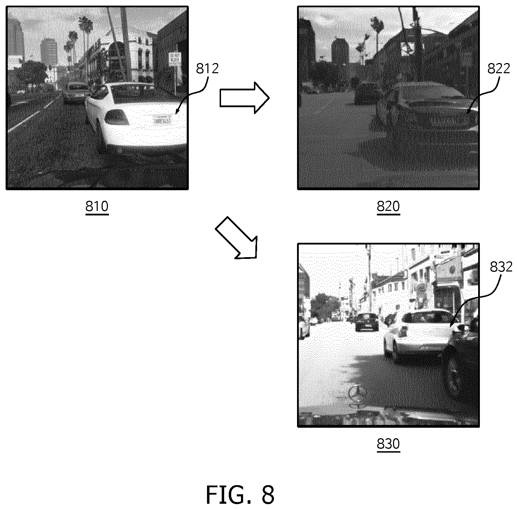

FIG. 8 is a diagram showing an example of a synthetic image 830 generated from an input image 810 in accordance with some embodiments of the present disclosure. According to some embodiments, the trained image generation model may generate/output the synthetic image 830 based on the input image 810. For example, the image generation model trained according to the present disclosure may output the synthetic image 830 based on content information extracted from the input image 810. At this time, the image generation model may be trained based on a plurality of training images, content information extracted from the plurality of training images, and augmented content information generated from the extracted content information.

According to some embodiments, the trained image generation model may generate the synthetic image 830 by using the content information of the input image 810 as a weak constraint or soft constraint. For example, the image generation model may not be overly dependent on the content information of the input image 810 by not applying pixel-wise the content information of the input image as a hard constraint. Accordingly, the content information of the synthetic image 830 may be similar to, but not the same as, the content information of the input image 810.

A synthetic image 820 may be an example in which the content information of the input image 810 is applied as a hard constraint. For example, if the image generation model is trained based on a plurality of training images and content information extracted from the plurality of training images, the image generation model may generate a synthetic image using the content information as a hard constraint. Referring to FIG. 8, the synthetic image 820 may be generated to have the same content information as the input image 810 but a different domain style from the input image 810 as the content information of the input image 810 is applied pixel-wise as a hard constraint. Accordingly, the structural information of objects (e.g., category information, shape information, location information, etc., of the objects) in the input image 810 may be directly applied to the synthetic image 820. For example, the shape and location of the pixel area occupied by the car 812 in the input image 810 may be directly applied to the car 822 in the synthetic image 820. Accordingly, the shape of the car 822 in the synthetic image 820 may be distorted or deformed unnaturally.

In contrast, the synthetic image 830 may be an example in which the content information of the input image 810 is applied as a soft constraint. The content information of the synthetic image 830 may not be the same as, but may be similar to, the content information of the input image 810, but may be generated to have a different domain style from the input image 810. Accordingly, the structural information of the objects in the input image 810 may be partially modified and applied. For example, the shape and location of the pixel area occupied by the car 812 in the input image 810 may be different from the pixel area and location occupied by the car 832 in the synthetic image 830. Accordingly, the shapes and locations of objects may be arranged more naturally according to a target domain style, thereby generating a high-quality synthetic image 830.

According to some embodiments, the image generation model trained with training images in a first domain style may generate a synthetic image 830 in the first domain style. For example, the processor may extract second content information from the input image 810 in a second domain style and input it into the image generation model. Thereafter, the image generation model may output a synthetic image 830 in the first domain style associated with the second content information. At this time, the first domain style and the second domain style may be different from each other.

FIG. 8 shows that the domain style of the input image 810 is a virtual domain style and the domain style of the synthetic image 830 is a real domain style, but the domain style of the input image 810 and/or the domain style of the synthetic image 830 are not limited thereto. For example, the domain style of the input image 810 and/or the domain style of the synthetic image 830 may include various types of domain styles (e.g., a cartoon image style, a pointillism image style, a hand drawing image style, etc.).

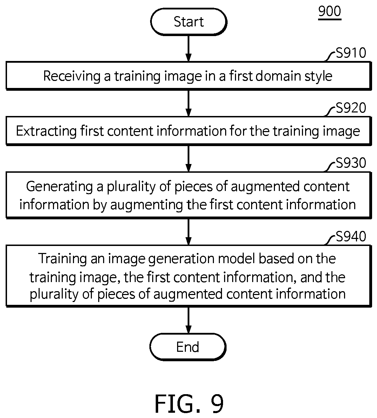

FIG. 9 is a flowchart showing an example of a method 900 for training an image generation model in accordance with some embodiments of the present disclosure. In some embodiments, the method 900 may be performed by at least one processor of a user terminal and/or an information processing system. The method 900 may begin with the processor receiving a training image in a first domain style (S910). Thereafter, the processor may extract first content information for the training image (S920). In this case, the first content information may represent the structural information on objects in the training image.

Thereafter, the processor may generate a plurality of pieces of augmented content information by augmenting the first content information (S930). For instance, the processor may perform image processing to perturb the first content information. For example, the image processing may include at least one of translation processing, rotation processing, flipping processing, enlargement processing, reduction processing, crop processing, brightness adjustment processing, saturation adjustment processing, or noise injection processing.

Thereafter, the processor may train an image generation model based on the training image, the first content information, and the plurality of pieces of augmented content information (S940). For example, the pair of the training image and the first content information, and the pairs of the training image and each of the plurality of pieces of augmented content information may be used as training data for training the image generation model.

The flowchart in FIG. 9 and the foregoing description are merely examples, and the scope of the present disclosure is not limited thereto. For example, at least one step may be added/changed/deleted, or the order of each step may be changed.

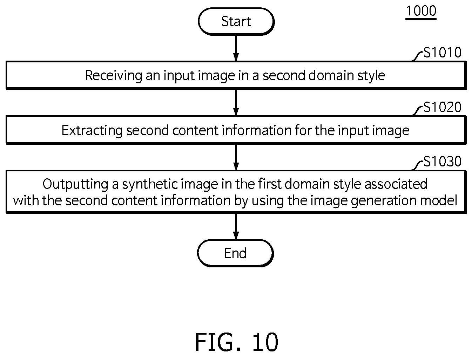

FIG. 10 is a flowchart showing an example of an image generation method 1000 in accordance with some embodiments of the present disclosure. In some embodiments, the method 1000 may be performed by at least one processor of a user terminal and/or an information processing system. The method 1000 may begin with the processor receiving an input image in a second domain style (S1010). Thereafter, the processor may extract second content information for the input image (S1020). In this case, the second content information may be extracted from the input image in the second domain style, and the first domain style and the second domain style may be different from each other. For example, the second domain style may be a virtual domain style, and the first domain style may be a real domain style.

Thereafter, the processor may output a synthetic image in the first domain style associated with the second content information by using the image generation model. In this case, the trained image generation model may have been trained to generate a synthetic image in the first domain style based on the second content information. Further, the image generation model may have been trained to generate a synthetic image in the first domain style with the second content information as a soft constraint.

The flowchart in FIG. 10 and the foregoing description are merely examples, and the scope of the present disclosure is not limited thereto. For example, at least one step may be added/changed/deleted, or the order of each step may be changed.

The methods described above may be provided as computer programs stored on a computer-readable recording medium for execution on a computer. The medium may continue to store computer-executable programs or temporarily store them for execution or download. Moreover, the medium may be a variety of recording or storage means in the form of a single piece of hardware or a combination of several pieces of hardware, and is not limited to media directly connected to a computer system but may be distributed over a network as well. Examples of media may be those configured to store program instructions, including magnetic media such as hard disks, floppy disks, and magnetic tapes, optical recording media such as CD-ROMs and DVDs, magneto-optical media such as floptical disks, ROM, RAM, flash memory, etc. Moreover, examples of other media may include recording or storage media managed by app stores that distribute applications, sites that supply or distribute various other software, servers, etc.

The methods, operations, or techniques of the present disclosure may be implemented by a variety of means. For example, these techniques may be implemented in hardware, firmware, software, or a combination thereof. Those skilled in the art will appreciate that the various example logic blocks, modules, circuits, and algorithm steps described in connection with the disclosure herein may be implemented in electronic hardware, computer software, or a combination of both. To clearly describe this interchangeability of hardware and software, the various example components, blocks, modules, circuits, and steps have been described above generally in terms of their functionality. Whether such functionality is implemented in hardware or software depends on the particular application and design requirements imposed on the overall system. Those skilled in the art may implement the described functionality in a variety of ways for each particular application, but such implementations should not be construed as departing from the scope of the present disclosure.

In hardware implementations, the processing units used to perform the techniques may be implemented within one or more ASICs, DSPs, GPUs, digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computers, or combinations thereof.

Therefore, the various example logic blocks, modules, and circuits described in connection with the present disclosure may be implemented or performed in any combination of general-purpose processors, DSPs, ASICs, FPGAs or other programmable logic devices, discrete gate or transistor logic, discrete hardware components, or those designed to perform the functions described herein. The general-purpose processor may be a microprocessor, but in other examples, the processor may be any conventional processor, controller, microcontroller, or state machine. The processor may also be implemented as a combination of computing devices, for example, a combination of a DSP and a microprocessor, a plurality of microprocessors, one or more microprocessors in conjunction with a DSP core, or any other configurations.

In firmware and/or software implementations, the techniques may be implemented as instructions stored on a computer-readable medium such as random-access memory (RAM), read-only memory (ROM), non-volatile random-access memory (NVRAM), PROM (programmable read-only memory), EPROM (erasable programmable read-only memory), EEPROM (electrically erasable PROM), flash memory, compact discs (CDs), magnetic or optical data storage devices, etc. The instructions may be executable by one or more processors, and may cause the processor(s) to perform certain aspects of the functionality described in the present disclosure.

If implemented in software, the techniques may be stored on or transmitted via a computer-readable medium as one or more instructions or code. The computer-readable media include both computer storage media and communication media, including any medium that facilitates the transmission of a computer program from one place to another. The storage media may be any available media that can be accessed by a computer. By way of nonlimiting example, the computer-readable media may include RAM, ROM, EEPROM, CD-ROM or other optical disc storages, magnetic disk storage or other magnetic storage devices, or any other media that can be used to transport or store the desired program code in the form of instructions or data structures and that can be accessed by a computer. Moreover, any access is made appropriately to the computer-readable media.

For example, if the software is transmitted from websites, servers, or other remote sources using coaxial cables, fiber optic cables, twisted pair cables, digital subscriber lines (DSLs), or wireless technologies such as infrared, radio, and microwave, then the coaxial cables, fiber optic cables, twisted pair cables, digital subscriber lines, or wireless technologies such as infrared, radio, and microwave are included within the definition of media. The disks and discs used herein include CDs, laser discs, optical discs, digital versatile discs (DVDs), floppy disks, and Blu-ray discs, wherein the disks typically reproduce data magnetically, whereas the discs reproduce data optically using lasers. Combinations of the above should also be included within the scope of computer-readable media.

The software modules may reside in RAM memory, flash memory, ROM memory, EPROM memory, EEPROM memory, registers, a hard disk, a removable disk, a CD-ROM, or any other form of storage medium known. An example storage medium may be connected to the processor such that the processor can read information from or write information to the storage medium. In other examples, the storage medium may be integrated into the processor. The processor and storage medium may be present within an ASIC. The ASIC may be present within the user terminal. In other examples, the processor and storage medium may be present as separate components in the user terminal.

Although the embodiments have been described above as utilizing aspects of the presently disclosed subject matter in one or more standalone computer systems, the present disclosure is not limited thereto but may be implemented in conjunction with any computing environment, such as a network or distributed computing environment. Furthermore, aspects of the subject matter in the present disclosure may be implemented in a plurality of processing chips or devices, and storage may be affected similarly across a plurality of devices. These devices may include PCs, network servers, and portable devices.

Although the present disclosure has been described herein in relation to some embodiments, various modifications and changes can be made without departing from the scope of the present disclosure that can be understood by those skilled in the art to which the present disclosure pertains. Further, such modifications and changes should be considered to fall within the scope of the claims appended hereto.

## Claims

1. A method, of training an image generation model, performed by at least one processor, the method comprising:
receiving a training image in a first domain style;
extracting, by the at least one processor, first content information for the training image;
generating, by the at least one processor, a plurality of pieces of augmented content information perturbed from the first content information as part of image processing by augmenting the first content information; and
training an image generation model to generate a synthetic image in the first domain style from an input image in a second domain style different from the first domain style, wherein the training of the image generation model is based on:
the training image,
the first content information, and
the plurality of pieces of augmented content information.

2. The method as claimed in claim 1, wherein the first content information represents structural information on objects in the training image.

3. The method as claimed in claim 1, wherein the generating the plurality of pieces of augmented content information comprises perturbing the first content information as part of image processing, and
wherein the image processing comprises at least one of translation processing, rotation processing, flipping processing, enlargement processing, reduction processing, crop processing, brightness adjustment processing, saturation adjustment processing, or noise injection processing.

4. The method as claimed in claim 1, wherein a pair of the training image and the first content information and pairs of the training image and each of the plurality of pieces of augmented content information are used as training data for training the image generation model.

5. The method as claimed in claim 4, wherein the trained image generation model is trained to generate a synthetic image in the first domain style with second content information as a soft constraint.

6. The method as claimed in claim 1, wherein the trained image generation model is trained to generate, based on second content information, a synthetic image in the first domain style.

7. The method as claimed in claim 5, wherein the second content information is extracted from an input image in a second domain style, and
the first domain style and the second domain style are different from each other.

8. The method as claimed in claim 7, wherein the second domain style is a virtual domain style, and
the first domain style is a real domain style.

9. A method, of generating an image, performed by at least one processor, the method comprising:
receiving an input image in a second domain style different from a first domain style;
extracting second content information for the input image; and
outputting a synthetic image in the first domain style associated with the second content information by using an image generation model,
wherein the image generation model:
receives a training image in the first domain style,
extracts first content information for the training image,
generates a plurality of pieces of augmented content information perturbed from the first content information as part of image processing by augmenting the first content information, and
is trained to generate the synthetic image in the first domain style from the input image in the second domain style, wherein the image generation model is trained based on the training image, the first content information, and the plurality of pieces of augmented content information.

10. A non-transitory computer-readable medium storing instructions, when executed, cause performance of the method according to claim 1.

11. An information processing system comprising:
a communication interface;
a memory; and
at least one processor coupled to the memory and configured to execute at least one computer-readable program included in the memory,
wherein the at least one computer-readable program comprises instructions that, when executed by the at least one processor, cause the information processing system to:
receive a training image in a first domain style,
extract first content information for the training image,
generate a plurality of pieces of augmented content information perturbed from the first content information as part of image processing by augmenting the first content information, and
train an image generation model to generate a synthetic image in the first domain style from an input image in a second domain style different from the first domain style, wherein training of the image generation model is based on:
the training image,
the first content information, and
the plurality of pieces of augmented content information.
